# FASCICULE DE BREVET EUROPEEN

(11) **EP 1 366 954 B1**
(45) Date de publication et mention de la délivrance du brevet: **22.03.2006**
(21) Numéro de dépôt: 03291220.6
(22) Date de dépôt: 22.05.2003
(51) Int. Cl.: B60Q 1/00, F21V 17/00

(54) **Dispositif d'élairage et/ou de signalisation pour véhicule comprenant un masque**
Beleuchtung- und/oder Signaleinrichtung für Kfz mit einem Abdeckteils
Vehicle lighting and/or signalling device with a mask

(30) Priorité: 31.05.2002 FR 0206755
(43) Date de publication de la demande: 03.12.2003
(73) Titulaire: VALEO VISION, 93012 Bobigny Cédex (FR)
(72) Inventeur: Obee, Philippe, 7022 Nouvelles (BE); Dejardin, Marc, 5300 Seilles (BE); Herbin, Cyril, 59770 Marly (FR)
(74) Mandataire: Renous Chan, Véronique

(56) Documents cités:
- EP-A- 1 004 473
- EP-A- 1 110 813
- EP-A- 1 291 240
- FR-A- 2 732 748
- US-B1- 6 267 488

## Description

La présente invention a pour objet un dispositif d'éclairage et/ou de signalisation pour véhicule automobile.

Le domaine de l'invention est, d'une façon générale, celui des projecteurs de véhicule automobile. Dans ce domaine, on connaît différents types de fonctions, parmi lesquelles on trouve notamment :
- des feux de position (« lampe-ville »), d'intensité et de portée faible ;
- des feux de changement de direction (les clignotants)
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route, et des feux de complément de type longue portée, dont la zone de vision sur la route avoisine 200 mètres, et qui doivent être éteints lorsque l'on croise un autre véhicule afin de ne pas éblouir son conducteur ;
- des feux anti-brouillard, des feux dits feux diumes etc ...

On connaît certains projecteurs perfectionnés, appelés projecteurs bimodes, qui cumulent les fonctions de feux de croisement et de feux de route à l'aide d'une seule lampe et d'un cache amovible.

Le dispositif selon l'invention est destiné à combiner dans un seul boitier plusieurs de ces feux. L'invention s'intéresse plus particulièrement, sans s'y limiter, à des projecteurs qui utilisent un boîtier où sont disposées plusieurs cavités adjacentes, chacune d'entre elles étant équipées d'une ou plusieurs lampes pour remplir plusieurs fonctions. A titre d'exemple, il peut s'agir de deux cavités, l'une pour l'éclairage et équipée d'une lampe pour feux de route/ de croisement, l'autre cavité étant réservée à la signalisation avec une lampe-ville ou un clignotant.

Il est connu que ces cavités comportent des parois formant réflecteur, parois dont le fond est percé d'une ouverture pour permettre d'introduire et éventuellement de fixer la lampe dans lesdites cavités. Il est aussi connu de prolonger vers l'avant ces parois formant réflecteurs par des parois latérales qui vont définir le pourtour visible des cavités. Ces parois n'ont pas la fonction optique des réflecteurs, elles sont là pour « habiller » ces cavités, pour donner une impression de continuité entre les réflecteurs et la glace qui va fermer ces cavités. Usuellement, ces masques sont moulés en une seule pièce, puis comme les réflecteurs, ils doivent subir une étape de traitement de surface du type métallisation.

Cette étape de métallisation est délicate, dans la mesure où il faut un revêtement homogène d'aspect, bien continu. Plus les pièces à métalliser sont profondes, plus cette homogénéité d'aspect est difficile à obtenir. C'est la raison pour laquelle métalliser simultanément les masques et les réflecteurs associés est difficile, quand les cavités ainsi crées sont beaucoup pus profondes que hautes.

On peut avoir aussi besoin d'ajouter des fonctionnalités supplémentaires aux reflecteurs, notamment leur fixer des éléments du type occulteur de style (c'est à dire une pièce qui vient pour des raisons esthétiques occulter le sommet de la lampe voire la rendre entièrement ou quasiment entièrement non visible), de type cache (notamment pour empêcher qu'une partie du faisceau lumineux émis par la lampe en question ne vienne frapper le masque et y créer des rayons réfléchis parasites) ou encore un élément pour modifier le faisceau lumineux ou modifier son aspect, du type lentille de Fresnel. Ces éléments additionnels sont également susceptibles de perturber l'étape de métallisation.

Il est connu du brevet FR 2 732 748 un bloc optique de véhicule, comprenant un enjoliveur et des moyens optiques, l'enjoliveur et au moins une partie des moyens optiques du feu de signalisation étant directement solidaires l'un de l'autre. Il est connu du brevet EP 1 110813 un projecteur pour véhicule avec une pluralité de masques. Il est connu du brevet US 6 267 488 un projecteur avec un masque disposé entre le réflecteur et la glace de fermeture du boîtier du projecteur. Il est connu du brevet EP 1 004 473 un projecteur avec plusieurs réflecteurs et plusieurs masques disposés au dessus et au dessous des réflecteurs. Il est connu du brevet EP 1 291 240 un masque circulaire entourant un réflecteur de pourtour circulaire également.

Le but de l'invention est alors de concevoir un nouveau type de masque apte à intégrer plusieurs fonctionnalités, outre sa fonction première de masque. Accessoirement, il s'agit de faire un masque destiné à équiper plusieurs cavités munies d'au moins une lampe chacune, dont notamment une cavité dédiée essentiellement à l'éclairage et l'autre cavité à la signalisation, et de concevoir un masque facile à réaliser, esthétique, que l'on peut métalliser de façon satisfaisante et que l'on peut facilement adapter.

L'invention a tout d'abord pour objet un dispositif d'éclairage et/ou de signalisation pour véhicule comprenant un masque constituant le pourtour des parois latérales d'au moins deux cavités destinées à loger dans chacune d'elles au moins une lampe . Ce masque comprend au moins deux parties (A, B) fixées mécaniquement l'une à l'autre, de préférence de façon amovible, l'une au moins (A) se prolongeant en un réflecteur ou une portion de réflecteur.

Utiliser un masque en au moins deux parties complémentaires est avantageux pour différentes raisons : tout d'abord, on peut différencier l'aspect des différentes parties du masque, en choisissant pour chacune des parties des traitements de surface différenciés par exemple, ce qui est esthétiquement intéressant. Ensuite, on peut contoumer ainsi la difficulté éventuelle à traiter en surface (par un traitement de type métallisation), un masque en une pièce et assez profond : on peut métalliser chaque partie de masque séparément, ce qui permet de garantir une métallisation satisfaisante par une meilleure accessibilité des surfaces à traiter. Du même coup, on peut alors envisager de faire assumer au masque d'autres fonctionnalités, sans être pénalisé en termes de qualité de traitement de surface. C'est la raison pour laquelle une des parties du masque selon l'invention se prolonge en réflecteur : il est avantageux de faire ainsi porter un réflecteur par le masque, dans la mesure où il n'est pas toujours possible ou facile d'envisager de fixer le réflecteur au boîtier.

Avantageusement, les moyens de fixation des parties (A,B) du masque entre elles font partie intégrante desdites parties (A,B), par un système de clipsage, notamment invisible une fois le masque monté dans ledit dispositif. L'intérêt de masquer ces fixations est double: d'une part, il est esthétique, on peut ainsi donner l'impression que le masque est en fait en une partie. L'avantage est aussi technique : en prévoyant un clipsage invisible une fois le projecteur complet (notamment par un clipsage en arrière des cavités, dans les zones « arrières » des parties de masque, c'est-à-dire les zones qui seront cachées par le boîtier une fois le dispositif monté), il est possible d'approcher les deux parties de masque l'une de l'autre lors de l'opération de clipsage sans risquer de griffer les zones du masque qui seront visibles une fois le projecteur complet.

Avantageusement, les deux parties (A,B) du masque sont configurées de façon à assurer un centrage mutuel lors de leur fixation, notamment par clipsage en une ou deux étapes. De préférence, comme cela sera décrit à l'aide des figures, le clipsage se fait en deux étapes, en deux points puis en deux autres points d'attache.

De préférence, le masque selon l'invention comporte une paroi périphérique cloisonnée, la (les) cloison(s) constituant la (les) paroi(s) séparant les cavités les unes des autres.

De préférence, ledit réflecteur ou portion de réflecteur qui fait partie d'une des parties (A) du masque constitue tout ou partie de la paroi arrière d'une des cavités (2). Il s'agit par exemple d'un réflecteur qu'on associe à une lampe de type signalisation, lampe-ville.

De préférence, la partie (A) du masque se prolongeant en un réflecteur ou portion de réflecteur comporte au moins un élément additionnel lui conférant une fonctionnalité supplémentaire, notamment optique. Il s'agit, par exemple, d'un élément destiné à modifier le faisceau lumineux émis par l'une des lampes, du type lentille de Fresnel. Il peut aussi s'agir d'un élément destiné à occulter tout ou partie dudit faisceau lumineux ou une partie de la lampe elle même, du type occulteur ou cache de style.

Ledit élément est relié de préférence à la partie (A) du masque par un bras de longueur et de positionnement tels que l'élément se trouve à l'aplomb de l'emplacement de la lampe dans la cavité délimitée au moins en partie par ladite partie (A) du masque.

Avantageusement, les parties (A, B) du masque sont chacune moulées en une seule pièce. Comme mentionné plus haut, les parties (A,B) du masque peuvent être chacune aluminées de façon à avoir un aspect identique ou au contraire différencié.

Selon un mode de réalisation préféré, le masque est en deux parties (A,B) et définit deux cavités, avec :
- la partie (B) comportant une portion majoritaire de la paroi périphérique du masque dans son ensemble et comportant la cloison séparant les deux cavités,
- la partie (A) comportant une portion complémentaire de la paroi périphérique du masque et se prolongeant en un réflecteur ou portion de réflecteur constituant tout ou partie de la paroi arrière d'une des deux cavités et dont la base vient au contact de la partie postérieure de la cloison de la partie (B) du masque

Avantageusement selon ce mode de réalisation, la partie postérieure de la cloison de la partie (B) du masque est munie d'une portion de paroi arrière de la cavité , portion délimitant un orifice , notamment cylindrique, par lequel la lampe peut être introduite dans la cavité. La portion de paroi arrière de la cavité autour de l'orifice peut être une portion de réflecteur dans la continuité du réflecteur de la partie (A) du masque.

Toujours selon ce mode de réalisation, la portion de paroi arrière de la cavité peut être munie en avant de l'orifice d'au moins une paroi en forme de secteur de cylindre, notamment deux. On peut aussi configurer la portion de paroi arrière de la cavité de façon à la munir à l'arrière de l'orifice d'une portion de cylindre aux dimensions dudit orifice et s'achevant de préférence par une bague cylindrique.

De préférence, le masque selon l'invention comporte deux parties (A,B) fixées l'une à l'autre par clipsage, par quatre points d'attache constitués par autant de paires ergot/insert. On a alors un montage en deux temps : on insère deux paires d'inserts dans deux ergots complémentaires, puis deux autres paires d'inserts dans deux autres paires d'ergots en "forçant " légèrement leur positionnement relatif, de façon à bloquer en position les deux parties du masque.

On peut notamment avoir un masque définissant au moins deux cavités, une cavité étant munie d'une lampe apte à assumer une fonction d'éclairage du type feu de route/feu de croisement et/ou d'éclairage infra-rouge, une autre cavité étant munie d'une lampe apte à assumer une fonction de signalisation du type lampe-ville, indicateur de changement de direction.

L'invention a également pour objet le projecteur complet, qui peut comprendre un ou plusieurs des masques selon l'invention.

L'invention a également pour objet le véhicule automobile équipé d'au moins un tel dispositif.

L'invention sera décrite plus en détails à l'aide d'un exemple de réalisation non limitatif illustré par les figures suivantes :
- **figure 1** : la partie B du masque en vue de trois quart avant (1.a), et de trois quart arrière (1b)
- **figure 2** : la partie A du masque en vue de trois quart avant (2.a), et de trois quart arrière (2.b)
- **figure 3** : le masque au complet en vue de trois quart avant (3.a) et de trois quart arrière (3.b)

Les figures sont indicatives et ne sont pas nécessairement à l'échelle.

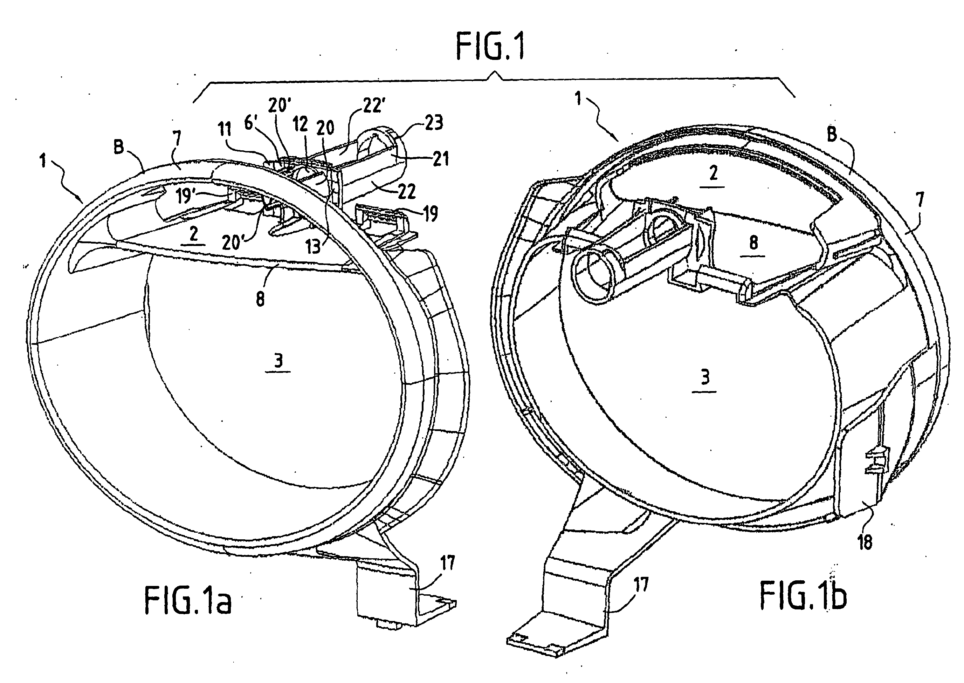

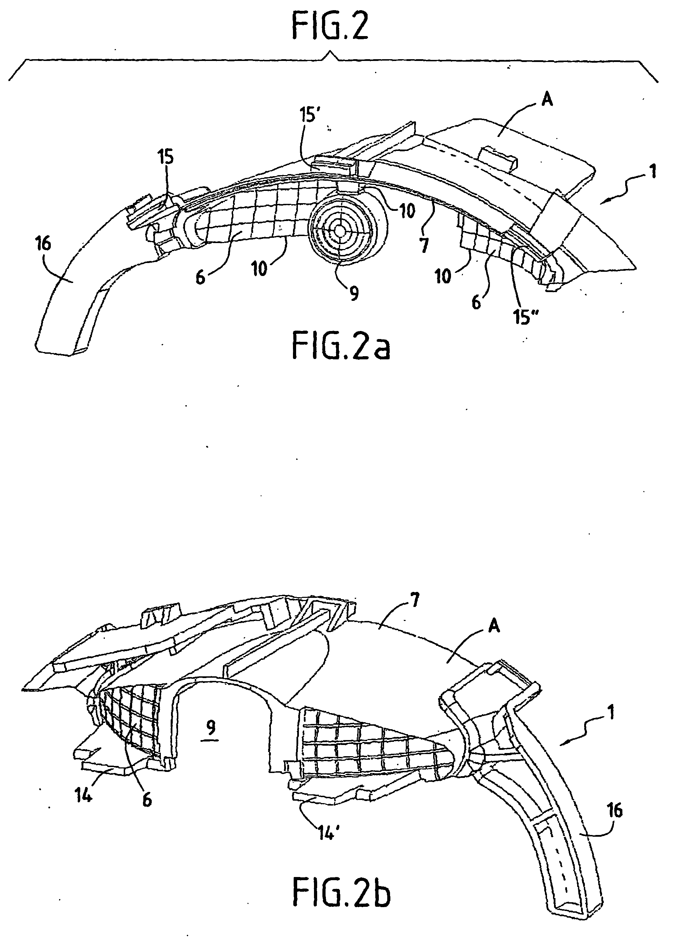

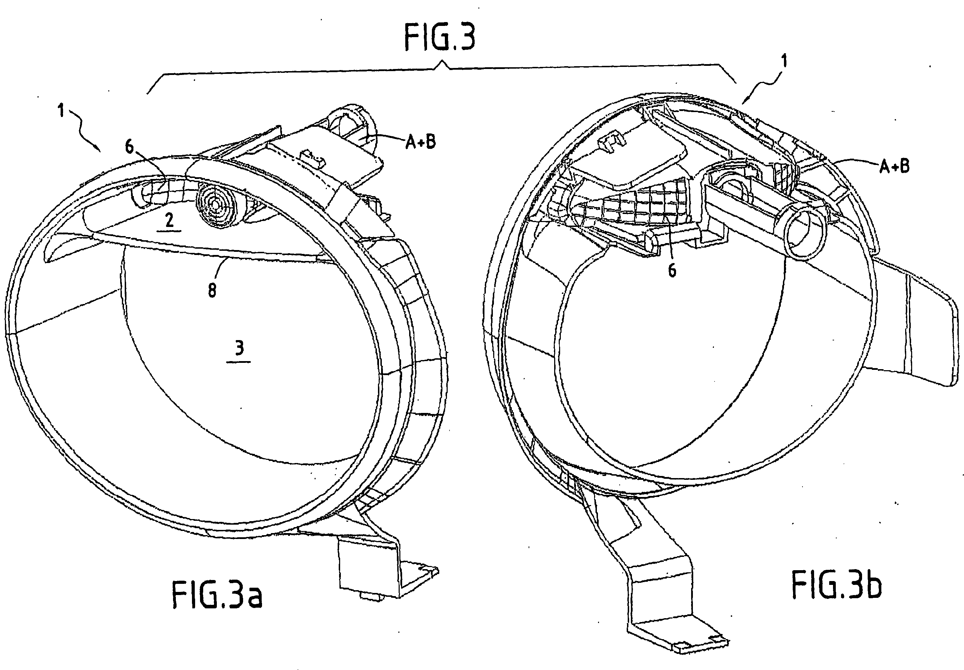

La figure 2 montre donc sous différents angles la partie A du masque. Il s'agit d'une pièce moulée en PEI (polyether imide) qui a été aluminée de façon connue. Tout autre matériau plastique approprié peut être utilisé à la place du PEI, et notamment le polycarbonate PC. La pièce comporte une portion de la paroi 7 périphérique du masque dans son ensemble tel que représenté en figure 3. Elle comporte également une portion de réflecteur 6 constitué ici à titre d'exemple d'une surface à facettes arrondie. Elle est également munie d'un élément occutteur 9 du type cache de style , destiné à cacher l'extrémité de la lampe destinée à être associée à ce réflecteur. Bien que totalement opaque et, de fait, métallisé comme le reste de la partie A, ce cache présente des stries circulaires à la manière d'une lentille de Fresnel, pour des raisons essentiellement esthétiques. Ce cache est relié au corps de la partie A dans sa zone de portion de paroi périphérique 7 par un bras 10 qui est de longueur et de positionnement approprié pour être à l'aplomb du sommet de la lampe une fois montée. Le réflecteur 6 est interrompu par un orifice à l'arrière du cache 9. C'est la partie B du masque qui viendra optionnellement prolonger le réflecteur 6 de la partie A comme on le verra à la figure 1. La partie A est munie à l'arrière du réflecteur 6 d'une première paire d'inserts 14, 14' qui sont font saillie dans un plan sensiblement perpendiculaire à celui dans lequel se trouve le réflecteur 6. Elle est également munie d'une seconde série de trois inserts 15, 15', 15" qui sont en fait des prolongements localisés vers l'avant de la portion de paroi périphérique 7. Le nombre et la disposition des inserts, qui vont coopérer avec des ergots de la partie B du masque sont bien sûr modifiables. La partie A comporte aussi une aile 16 qui facilite sa fixation à la partie B du masque, et qui facilite sa préhension.

La figure 1 montre sous différents angles la partie B du masque. Elle est moulée d'une pièce et en PEI comme la partie A. Elle comporte une portion majoritaire de la paroi périphérique 7 du masque dans son ensemble, ainsi que la cloison 8 qui va séparer les deux cavités 2,3 du masque comme représenté en figure 3. Elle comporte des pattes de fixation 17, 18 au reste du projecteur. Tout le pourtour 7 est en fait une double paroi, le bord de la pièce formant un pli. Pour coopérer avec la paire d'inserts 14, 14' de la partie A, la partie B comporte deux ergots 19, 19'. Le positionnement des inserts 14, 14' dans les ergots 19, 19 constitue la première étape de fixation de la partie A à la partie B du masque, par un mouvement de pivotement de A par rapport à B. Pour coopérer avec la série de trois inserts 15, 15', 15" de A, la partie B ne présente pas d'ergots supplémentaires : les inserts vont en fait pouvoir être glissés; dans une deuxième étape, légèrement en force, dans le pli formé dans la paroi 7. Une fois les deux étapes de fixation effectuées, les parties A et B sont bloquées dans leur positionnement relatif. On a alors la base 10 du réflecteur 6 de la partie A qui repose sur la partie postérieure de la cloison 8 de la partie B, comme le montre la figure 3 : la cavité 2 est dont bien délimitée par la complémentarité des formes des parties A et B du masque 1. Il est toutefois aisé de séparer à nouveau les parties A et B au besoin. La partie B comprend aussi une portion de paroi 11 faisant partie de la paroi arrière de la cavité 2, et qui prolonge le réflecteur 6 en étant aussi localement sous forme d'une zone métallisée à facettes 6'. Cette zone 6' délimite un orifice 12, ici cylindrique, qui va permettre d'introduire la lampe dans la cavité 2 et de l'y loger. A l'avant de cet orifice 12, on voit en figure 2 deux secteurs de cylindre 20, 20' qui vont, comme l'occulteur 9, jouer un rôle d'occultation vis-à-vis de la lampe. A l'arrière de l'orifice 12, on a aussi une portion de cylindre 21 aux dimensions proches de celles de l'orifice 12 et des secteurs de cylindre 21, 21'. Cette portion de cylindre est évidée sur sa longueur et s'achève par une bague circulaire 23.

La figure 3 montre donc le masque 1 dans son ensemble, avec les deux cavités 2,3 qu'il délimite. La cavité 2 est destinée à être équipée d'une lampe-ville non représentée, la cavité 3 est destinée à être équipée d'une lampe route et/ou croisement. Le masque intègre donc le réflecteur 6,6' de la lampe-ville. On voit que la profondeur de la cavité 2 aurait rendue une métallisation du masque complet délicate. Avec un masque en deux parties, la métallisation n'est plus un problème, même avec des cavités profondes, même avec des éléments saillants du type occulteur. Le masque selon l'invention est esthétique car son montage autorise une continuité de surface d'une part entre les deux zones faisant office de masque des parties A et B, d'autre part entre la zone du masque faisant vraiment office de masque et celle faisant office de réflecteur .

Il reste dans le cadre de l'invention de modifier la taille/ la configuration relative des parties A et B du masque, la répartition de leurs rôles (par exemple en supprimant ou en augmentant la zone 6' de la partie B venant compléter le réflecteur 6 de la partie A ; en modifiant la forme, la taille des cavités 2,3, ...). L'invention concerne aussi le masque indépendamment du projecteur sur lequel il est destiné à être monté, et chacune des parties A et B du masque prises séparément.

## Revendications

1. Dispositif d'éclairage et/ou de signalisation pour véhicule comprenant un masque (1) constituant le pourtour des parois latérales d'au moins deux cavités (2,3) destinées à loger dans chacune d'elles au moins une lampe (4,5) **caractérisé en ce que** le masque (1) comprend au moins deux parties (A, B) fixées mécaniquement l'une à l'autre, de préférence de façon amovible, l'une au moins (A) se prolongeant en un réflecteur ou une portion de réflecteur (6), les deux parties (A,B) délimitant de façon complémentaire lesdites cavités.

2. Dispositif selon la revendication 1 **caractérisé en ce que** les moyens de fixation des parties (A,B) du masque entre elles font partie intégrante desdites parties (A,B), par un système de clipsage, notamment invisible une fois le masque monté dans ledit dispositif.

3. Dispositif selon l'une des revendications précédentes **caractérisé en ce que** les deux parties (A,B) du masque sont configurées de façon à assurer un centrage mutuel lors de leur fixation, notamment par clipsage en une ou deux étapes.

4. Dispositif selon l'une des revendications précédentes **caractérisé en ce que** ledit masque (1) comporte une paroi périphérique (7) cloisonnée, la (les) cloison(s) (8) constituant les parois séparant les cavités (2,3) les unes des autres.

5. Dispositif selon l'une des revendications précédentes **caractérisé en ce que** ledit réflecteur ou portion de réflecteur (6) constitue tout ou partie de la paroi arrière d'une des cavités (2).

6. Dispositif selon l'une au moins des revendications précédentes **caractérisé en ce que** la partie (A) du masque se prolongeant en un réflecteur ou portion de réflecteur (6) comporte au moins un élément (9) destiné à modifier le faisceau lumineux émis par l'une des lampes (4), du type lentille de Fresnel, ou destiné à occulter tout ou partie dudit faisceau lumineux ou une partie de la lampe elle même, du type occulteur ou cache de style.

7. Dispositif selon la revendication 6 **caractérisé en ce que** ledit élément (9) est relié à la partie (A) du masque par un bras (10) de longueur et de positionnement tels que l'élément se trouve à l'aplomb de l'emplacement de la lampe dans la cavité (2) délimitée au moins en partie par ladite partie (A) du masque (1).

8. Dispositif selon l'une au moins des revendications précédentes **caractérisé en ce que** les parties (A, B) du masque (1) sont chacune moulées en une seule pièce.

9. Dispositif selon l'une au moins des revendications précédentes **caractérisé en ce que** les parties (A,B) du masque (1) sont chacune aluminées de façon à avoir un aspect identique ou différencié.

10. Dispositif selon l'une au moins des revendications précédentes **caractérisé en ce que** le masque (1) est en deux parties (A,B) :
- la partie (B) comportant une portion majoritaire de la paroi périphérique (7) du masque dans son ensemble et comportant la cloison (8) séparant les deux cavités (2,3),
- la partie (A) comportant une portion complémentaire de la paroi périphérique (7) du masque (1) et se prolongeant en un réflecteur ou portion de réflecteur (6) constituant tout ou partie de ta paroi arrière d'une (2) des deux cavités (2,3) et dont la base (10) vient au contact de la partie postérieure de la cloison (8) de la partie (B) du masque (1).

11. Dispositif selon la revendication précédente **caractérisé en ce que** la partie postérieure de la cloison (8) de la partie (B) du masque (1) est munie d'une portion de paroi arrière (11) de la cavité (2), portion délimitant un orifice (12), notamment cylindrique, par lequel la lampe (4) peut être introduite dans la cavité (2).

12. Dispositif selon la revendication 11 **caractérisé en ce que** la portion de paroi arrière (11) de la cavité (2) autour de l'orifice (12) est une portion de réflecteur (13) dans la continuité du réflecteur (6) de la partie (A) du masque.

13. Dispositif selon l'une au moins des revendications 11 ou 12 **caractérisé en ce que** la portion de paroi arrière (11) de la cavité (2) est munie en avant de l'orifice (12) d'au moins une paroi (20,20') en forme de secteur de cylindre, notamment deux (20, 20').

14. Dispositif selon l'une au moins des revendications 11 à 13 **caractérisé en ce que** la portion de paroi arrière (11) de la cavité (2) est munie à l'arrière de l'orifice (12) d'une portion de cylindre (21) aux dimensions dudit orifice et s'achevant de préférence par une bague (22) cylindrique.

15. Dispositif selon l'une au moins des revendications précédentes **caractérisé en ce que** le masque comporte deux parties (A,B) fixées l'une à l'autre par clipsage, par quatre points d'attache constitués par des paires ergotlinsert.

16. Dispositif selon l'une au moins des revendications précédentes **caractérisé en ce que** le masque définit au moins deux cavités (2,3), une cavité (3) étant munie d'une lampe apte à assumer une fonction d'éclairage du type feu de route/feu de croisement et/ou d'éclairage infra-rouge, une autre cavité (2) étant munie d'une lampe apte à assumer une fonction de signalisation du type lampe ville, indicateur de changement de direction.

17. Véhicule automobile équipé d'au moins un dispositif selon l'une des revendications précédentes.

## Patentansprüche

1. Fahrzeugbeleuchtungs- und/oder -signalgebungsvorrichtung, mit einer Abdeckung (1), die den Umfang der Seitenwandungen von wenigstens zwei Höhlungen (2, 3) bildet, die dazu bestimmt sind, jeweils wenigstens eine Lampe (4, 5) aufzunehmen,
**dadurch gekennzeichnet, dass** die Abdeckung (1) wenigstens zwei Teile (A, B) umfasst, die vorzugsweise lösbar mechanisch aneinander befestigt sind, wobei sich wenigstens eines (A) in einem Reflektor oder einem Reflektorstück (6) fortsetzt und die beiden Teile (A, B) die Höhlungen komplementär begrenzen.

2. Vorrichtung nach Anspruch 1,
**dadurch gekennzeichnet, dass** die Mittel zum gegenseitigen Befestigen der Teile (A, B) der Abdeckung durch ein Clip-System Bestandteil der Teile (A, B) sind, das nach Anbringen der Abdeckung in der Vorrichtung insbesondere nicht sichtbar ist.

3. Vorrichtung nach einem der vorhergehenden Ansprüche,
**dadurch gekennzeichnet, dass** die beiden Teile (A, B) der Abdeckung so ausgebildet sind, dass sie bei ihrer Befestigung insbesondere durch Festklipsen in einem oder zwei Schritten eine gegenseitige Zentrierung gewährleisten.

4. Vorrichtung nach einem der vorhergehenden Ansprüche,
**dadurch gekennzeichnet, dass** die Abdeckung (1) eine unterteilte Umfangswandung (7) aufweist, wobei die Zwischenwand bzw. -wände (8) die die Höhlungen (2, 3) voneinander trennenden Wandungen bilden.

5. Vorrichtung nach einem der vorhergehenden Ansprüche,
**dadurch gekennzeichnet, dass** der Reflektor oder das Reflektorstück (6) ganz oder teilweise die hintere Wandung einer der Höhlungen (2) bildet.

6. Vorrichtung nach einem der vorhergehenden Ansprüche,
**dadurch gekennzeichnet, dass** das sich in einem Reflektor oder einem Reflektorstück (6) fortsetzende Teil (A) der Abdeckung wenigstens ein Element (9) umfasst, das dazu bestimmt ist, das von einer der Lampen (4) abgestrahlte Lichtbündel zu verändern, nach Art einer Fresnel-Linse, oder dazu bestimmt ist, das Lichtbündel ganz oder teilweise oder einen Teil der Lampe selbst zu verdecken, nach Art eines Abschatters oder einer Zierkappe.

7. Vorrichtung nach Anspruch 6,
**dadurch gekennzeichnet, dass** das Element (9) mit dem Teil (A) der Abdeckung durch einen Arm (10) verbunden ist, der eine solche Länge und Lage aufweist, dass sich das Element lotrecht zum Standort der Lampe in der Höhlung (2) befindet, die wenigstens zum Teil durch das Teil (A) der Abdeckung (1) begrenzt ist.

8. Vorrichtung nach wenigstens einem der vorhergehenden Ansprüche,
**dadurch gekennzeichnet, dass** die Teile (A, B) der Abdeckung (1) jeweils aus einem Stück gegossen sind.

9. Vorrichtung nach wenigstens einem der vorhergehenden Ansprüche,
**dadurch gekennzeichnet, dass** die Teile (A, B) der Abdeckung (1) jeweils so aluminiert sind, dass sie ein identisches oder unterschiedliches Aussehen haben.

10. Vorrichtung nach wenigstens einem der vorhergehenden Ansprüche,
**dadurch gekennzeichnet, dass** die Abdeckung (1) aus zwei Teilen (A, B) besteht, wobei :
- der Teil (B) insgesamt ein größeres Stück der Umfangswandung (7) der Abdeckung und die die beiden Höhlungen (2, 3) voneinander trennende Zwischenwand (8) umfasst,
- der Teil (A) ein zusätzliches Stück der Umfangswandung (7) der Abdeckung (1) umfasst und sich in einem Reflektor oder einem Reflektorstück (6) fortsetzt, der bzw. das die rückwärtige Wandung einer (2) der beiden Höhlungen (2, 3) ganz oder teilweise bildet und dessen Basis (10) den hinteren Teil der Zwischenwand (8) des Teils (B) der Abdeckung (1) berührt.

11. Vorrichtung nach dem vorhergehenden Anspruch,
**dadurch gekennzeichnet, dass** der hintere Teil der Zwischenwand (8) des Teils (B) der Abdeckung (1) mit einem rückwärtigen Wandungsstück (11) der Höhlung (2) versehen ist, wobei dieses Stück eine insbesondere zylindrische Öffnung (12) begrenzt, durch die die Lampe (4) in die Höhlung (2) eingeführt werden kann.

12. Vorrichtung nach Anspruch 11,
**dadurch gekennzeichnet, dass** das rückwärtige Wandungsstück (11) der Höhlung (2) um die Öffnung (12) ein Reflektorstück (13) in Fortsetzung des Reflektors (6) des Teils (A) der Abdeckung ist.

13. Vorrichtung nach wenigstens einem der vorhergehenden Ansprüche 11 oder 12,
**dadurch gekennzeichnet, dass** das rückwärtige Wandungsstück (11) der Höhlung (2) vor der Öffnung (12) mit wenigstens einer Wandung (20, 20'), insbesondere mit zwei Wandungen (20, 20'), in Form eines Zylindersektors versehen ist.

14. Vorrichtung nach wenigstens einem der vorhergehenden Ansprüche 11 bis 13,
**dadurch gekennzeichnet, dass** das rückwärtige Wandungsstück (11) der Höhlung (2) hinter der Öffnung (12) mit einem Zylinderstück (21) versehen ist, das die Größe der Öffnung hat und vorzugsweise in einem zylindrischen Ring (22) endet.

15. Vorrichtung nach wenigstens einem der vorhergehenden Ansprüche,
**dadurch gekennzeichnet, dass** die Abdeckung zwei Teile (A, B) umfasst, die durch Festklipsen an vier Befestigungspunkten, die von Paaren aus Vorsprüngen/Einsatzteilen gebildet sind, aneinander befestigt sind.

16. Vorrichtung nach wenigstens einem der vorhergehenden Ansprüche,
**dadurch gekennzeichnet, dass** die Abdeckung wenigstens zwei Höhlungen (2, 3) bildet, wobei eine Höhlung (3) mit einer Lampe ausgestattet ist, die eine Beleuchtungsfunktion in der Art eines Fernlichts/Abblendlichts und/oder Infrarotlichts auszuführen vermag, wobei die andere Höhlung (2) mit einer Lampe ausgestattet ist, die eine Signalgebungsfunktion in der Art eines Standlichts, Blinklichts auszuführen vermag.

17. Kraftfahrzeug, ausgestattet mit wenigstens einer Vorrichtung nach einem der vorhergehenden Ansprüche.

## Claims

1. Lighting and/or signalling apparatus for a motor vehicle, including a mask (1) which constitutes the perimeter of the side walls of at least two cavities (2,3) which are adapted for each of them to contain at least one lamp (4,5), **characterised in that** the mask (1) comprises at least two parts (A,B) fixed mechanically to each other, preferably removably, with at least one said part (A) being extended in length by a reflector or reflector portion (6), the two said parts (A,B) being complementary with each other to delimit the said cavities.

2. Apparatus according to Claim 1, **characterised in that** the means for fastening the two parts (A,B) of the mask together are an integral portion of the said parts (A,B), the said fastening being a clipping system which is, in particular, invisible once the mask has been fitted in the said apparatus.

3. Apparatus according to Claim 1 or Claim 2, **characterised in that** the two parts (A,B) of the mask are configured so that they provide mutual centring while they are being fitted by clipping action, which in particular comprises one step or two.

4. Apparatus according to one of the preceding Claims, **characterised in that** the mask (1) has a partitioned peripheral wall (7), the partition or partitions (8) constituting the walls that separate the cavities (2,3) from each other.

5. Apparatus according to one of the preceding Claims, **characterised in that** the said reflector or reflector portion (6) constitutes all or part of the rear wall of one of the cavities (2).

6. Apparatus according to at least one of the preceding Claims, **characterised in that** the part (A) of the mask that is extended in a reflector or reflector portion (6) comprises at least one element (9) adapted to modify the light beam emitted by one of the lamps (4), being of the Fresnel lens type, or being adapted to occult the said light beam, wholly or partly, or being a part of the lamp, of the occulter or styling mask type, itself.

7. Apparatus according to Claim 6, **characterised in that** the said element (9) is joined to the said part (A) of the mask by an arm (10), the length and positioning of which are such that the element lies vertically below the emplacement of the lamp in the cavity (2) that is at least partly delimited by the said part (A) of the mask (1).

8. Apparatus according to at least one of the preceding Claims, **characterised in that**_each of the parts (A,B) of the mask is moulded in one piece.

9. Apparatus according to at least one of the preceding Claims, **characterised in that** each of the parts (A,B) of the mask is aluminised, in such a way that their appearance is identical or different.

10. Apparatus according to at least one of the preceding Claims, **characterised in that** the mask (1) is in two parts (A,B) wherein:
- the part (B) includes a major portion of the peripheral wall (7) of the assembled mask, and includes the partition (8) that separates the two cavities (,3) from each other, and
- the part (A) includes a complementary portion of the peripheral wall (7) of the mask (1), and is extended in length by a reflector or reflector portion (6) which constitutes all or part of the rear wall of one (2) of the two cavities (2,3), the base (10) of which comes into contact with the posterior portion of the partition (8) of the part (B) of the mask (1).

11. Apparatus according to Claim 10, **characterised in that** the posterior portion of the partition (8) of the part (B) of the mask (1) is formed with a rear wall portion (11) of the cavity (2), the said wall portion delimiting an aperture (12) which is preferably cylindrical, and through which the lamp (4) can be introduced into the cavity (2).

12. Apparatus according to Claim 11, **characterised in that** the rear wall portion (11) of the cavity (2) around the aperture (12) is a reflector portion (13) which is continuous with the reflector (6) of the part (A) of the mask.

13. Apparatus according to at least one of Claims 11 and 12, **characterised in that** the rear wall portion (11) of the cavity (2) is formed, forward of the aperture (12), with at least one wall (20, 20') in the form of a sector of a cylinder, there being preferably two said walls (20, 20') .

14. Apparatus according to at least one of Claims 11 to 13, **characterised in that** the rear wall portion (11) of the cavity (2) is formed, to the rear of the aperture (12), with a cylinder portion (21), to the dimensions of the said aperture and preferably consisting of a cylindrical sleeve (22).

15. Apparatus according to at least one of the preceding Claims, **characterised in that** the mask comprises two parts (A, B) which are secured together by clipping at four attachment points that consist of pairs of female and male elements.

16. Apparatus according to at least one of the preceding Claims, **characterised in that** the mask defines at least two cavities (2, 3), the cavity (3) being provided with a lamp adapted to assume a function of the cruising light/passing light and/or infra-red lighting type, a further cavity (2) being provided with a lamp which is adapted to assume a signalling function and which is of the sidelamp or direction indicator type.

17. A motor vehicle equipped with an apparatus according to one of the preceding Claims.
